(19) **Europäisches Patentamt**
**European Patent Office**
**Office européen des brevets**

(11) **EP 4 563 936 A1**

(12) **EUROPEAN PATENT APPLICATION**
published in accordance with Art. 153(4) EPC

(43) Date of publication:
**04.06.2025 Bulletin 2025/23**

(21) Application number: **23900258.7**

(22) Date of filing: **01.09.2023**

(51) International Patent Classification (IPC):
***G01B 11/06*** (2006.01)

(52) Cooperative Patent Classification (CPC):
**G01B 11/06**

(86) International application number:
**PCT/JP2023/032088**

(87) International publication number:
**WO 2024/122132 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 JP 2022194695**

(71) Applicant: **Hamamatsu Photonics K.K.
Hamamatsu-shi, Shizuoka 435-8558 (JP)**

(72) Inventors:
• **OHTSUKA, Kenichi
Hamamatsu-shi, Shizuoka 435-8558 (JP)**
• **MASUOKA, Hideki
Hamamatsu-shi, Shizuoka 435-8558 (JP)**
• **IGUCHI, Kazuya
Hamamatsu-shi, Shizuoka 435-8558 (JP)**

(74) Representative: **Grünecker Patent- und
Rechtsanwälte
PartG mbB
Leopoldstraße 4
80802 München (DE)**

(54) **FILM THICKNESS MEASUREMENT DEVICE AND FILM THICKNESS MEASUREMENT METHOD**

(57) In a film thickness measurement device 1, a spectroscopic unit 5 wavelength-resolves reference light L1 and measurement light L2 in a first direction D1, and forms a spectral image for each wavelength in a second direction D2 intersecting the first direction D1. A detection unit 6 includes a first pixel region 21A and a second pixel region 21B divided in the second direction D2, receives a spectral image P1 of the reference light L1 in the first pixel region 21A, and receives a spectral image P2 of the measurement light L2 in the second pixel region 21B.

*Fig.2*

EP 4 563 936 A1

## Description

### Technical Field

The present disclosure relates to a film thickness measurement device and a film thickness measurement method.

### Background Art

As a technique related to film thickness measurement, for example, there is a film thickness measurement device described in Patent Document 1. The film thickness measurement device includes: a measurement light source that supplies irradiation light to a measurement object; a spectroscopic detection unit that detects the intensity of the irradiation light and the intensity of reflected light from the measurement object for each wavelength; a coefficient recording unit that records a conversion coefficient for converting a detection value of the intensity for each wavelength of the irradiation light into a value corresponding to the intensity for each wavelength of the reflected light from the reference measurement object; and a reflectance calculation unit that calculates the reflectance for each wavelength of the measurement object on the basis of the detection value of the intensity for each wavelength of the irradiation light and a value corresponding to the intensity for each wavelength of the reflected light from the reference measurement object obtained from the conversion coefficient.

### Citation List

### Patent Literature

Patent Literature 1: Japanese Unexamined Patent Publication No. 2012-63321

### Summary of Invention

### Technical Problem

In the film thickness measurement device as described above, it is conceivable to switch an optical path of light for reference (reference light) toward the spectroscopic detection unit and an optical path of light for measurement (measurement light) using a mechanical shutter. However, when a mechanical shutter is used, there are technical problems such as correction against lack of simultaneity of detection of the reference light and the measurement light, securing of maintainability, securing of a sampling speed, and introduction of a mechanism or an optical system for adjusting signal intensity. On the other hand, in recent years, there is an increasing need for in-line measurement of a film thickness in a film forming process of various films such as an optical film, a thin film for a display panel, and a thin film for a semiconductor wafer. In order to stably perform in-line measurement of a film thickness, it is essential to solve the technical problems described above.

The present disclosure has been made to solve the above problems, and an object thereof is to provide a film thickness measurement device and a film thickness measurement method capable of stably performing in-line measurement of a film thickness.

### Solution to Problem

A film thickness measurement device according to one aspect of the present disclosure includes: a spectroscopic unit that spectrally disperses each of reference light output from a light source and measurement light output from the light source and reflected by a sample; a detection unit that detects a spectral image of the reference light and a spectral image of the measurement light, the reference light and the measurement light being dispersed by the spectroscopic unit; and an analysis unit that analyzes a film thickness of the sample on the basis of reference data obtained from a detection result of the spectral image of the reference light and measurement data obtained from a detection result of the spectral image of the measurement light, in which the spectroscopic unit wavelength-resolves the reference light and the measurement light in a first direction and forms a spectral image for each wavelength in a second direction intersecting the first direction, and the detection unit includes a first pixel region and a second pixel region divided in the second direction, receives the spectral image of the reference light in the first pixel region, and receives the spectral image of the measurement light in the second pixel region.

In this film thickness measurement device, the reference light and the measurement light are wavelength-resolved in the first direction, and the spectral image for each wavelength is formed in the second direction intersecting the first direction. Furthermore, the pixel region is divided in the second direction into the first pixel region and the second pixel region, the spectral image of the reference light is received in the first pixel region, and the spectral image of the measurement light is received in the second pixel region. As a result, the simultaneity of detection of the reference light and the measurement light can be secured, and the correction can be easily performed even when the stability of the light source is low. Furthermore, a mechanical movable portion for switching between the reference light and the measurement light becomes unnecessary, and maintainability and a sampling speed can be sufficiently secured. Moreover, since the exposure times of the first pixel region and the second pixel region can be adjusted independently, it is not necessary to introduce a mechanism or an optical system for adjusting signal intensity even in the case of measuring the film thicknesses of samples having different reflection intensities. Therefore, in this film thickness measurement device, in-line measurement of the film thickness can be stably performed.

The detection unit may be a CCD photodetector having a first horizontal shift register to which a charge generated in each column of the first pixel region is transferred, and a second horizontal shift register to which a charge generated in each column of the second pixel region is transferred. With such a configuration, reading out the charge of each pixel corresponding to the spectral image of the reference light received in the first pixel region and reading out the charge of each pixel corresponding to the spectral image of the measurement light received in the second pixel region can be performed in parallel. Furthermore, by using the CCD photodetector, it is possible to avoid an increase in readout noise when charges generated in the pixels of each column are read out.

The detection unit may be a CCD photodetector including: a first accumulation unit in which a charge generated in each column of the first pixel region are accumulated; a second accumulation unit in which a charge generated in each column of the second pixel region are accumulated; a first readout unit that outputs an electrical signal of each column corresponding to a magnitude of the charge accumulated in the first accumulation unit; and a second readout unit that outputs an electrical signal of each column according to a magnitude of the charge accumulated in the second accumulation unit. Also in such a configuration, reading out the charge of each pixel corresponding to the spectral image of the reference light received in the first pixel region and reading out the charge of each pixel corresponding to the spectral image of the measurement light received in the second pixel region can be performed in parallel. Furthermore, by using the CCD photodetector, it is possible to avoid an increase in readout noise when charges generated in the pixels of each column are read out.

The detection unit may be a CMOS photodetector including: a first readout unit that outputs a charge generated in each column of the first pixel region; and a second readout unit that outputs a charge generated in each column of the second pixel region. Also in such a configuration, reading out the charge of each pixel corresponding to the spectral image of the reference light received in the first pixel region and reading out the charge of each pixel corresponding to the spectral image of the measurement light received in the second pixel region can be performed in parallel.

The film thickness measurement device may include: a first optical fiber that guides the reference light to the spectroscopic unit; a second optical fiber that guides the measurement light to the spectroscopic unit; and a fiber end in which a core of the first optical fiber and a core of the second optical fiber are bundled, in which an arrangement direction of the core of the first optical fiber and the core of the second optical fiber at the fiber end may coincide with an extending direction of a slit on an input surface of the spectroscopic unit. According to such a configuration, the spectral image of the reference light formed in the first pixel region and the spectral image of the measurement light formed in the second pixel region can be suitably separated. Therefore, crosstalk between the reference light and the measurement light can be suppressed.

A dummy core that physically separates the core of the first optical fiber and the core of the second optical fiber may be provided at the fiber end. In this case, it is possible to more reliably separate the spectral image of the reference light formed in the first pixel region and the spectral image of the measurement light formed in the second pixel region. Therefore, crosstalk between the reference light and the measurement light can be more effectively suppressed.

A calculation unit that calculates a conversion coefficient for converting a detection value of an intensity for each wavelength of the reference light into a value corresponding to an intensity for each wavelength of the measurement light from a reference sample may be included, in which the calculation unit may calculate the conversion coefficient by using an exposure time ratio between the first pixel region and the second pixel region, and the analysis unit may calculate reflectance for each wavelength of the sample on the basis of the detection value of the intensity for each wavelength of the reference light and a value corresponding to the intensity for each wavelength of the measurement light from the reference sample, the value being obtained from the conversion coefficient. In this case, when the film thickness of the sample is measured, a value corresponding to the intensity for each wavelength of the measurement light from the reference sample can be calculated for each measurement on the basis of the detection value of the intensity for each wavelength of the measurement light and the conversion coefficient without using the reference sample. Therefore, even when the intensity of the measurement light varies for each wavelength, the reflectance of the sample for each wavelength can be accurately measured, and the accuracy of the film thickness measurement can be improved.

A film thickness measurement method according to one aspect of the present disclosure includes: a spectroscopic step of spectrally dispersing each of reference light output from a light source and measurement light output from the light source and reflected by a sample; a detection step of detecting a spectral image of the reference light and a spectral image of the measurement light, the reference light and the measurement light being dispersed by the spectroscopic step; and an analysis step of analyzing a film thickness of the sample on the basis of reference data obtained from a detection result of the spectral image of the reference light and measurement data obtained from a detection result of the spectral image of the measurement light, in which in the spectroscopic step, the reference light and the measurement light are wavelength-resolved in a first direction and a spectral image for each wavelength is formed in a second direction intersecting the first direction, and in the detection step, using a first pixel region and a second pixel region divided in the second direction, the spectral image of the reference light is received in the first pixel region, and the spectral image of the measurement light is received in the second pixel region.

In this film thickness measurement method, the reference light and the measurement light are wavelength-resolved in the first direction, and the spectral image for each wavelength is formed in the second direction intersecting the first direction. Furthermore, the pixel region is divided in the second direction into the first pixel region and the second pixel region, the spectral image of the reference light is received in the first pixel region, and the spectral image of the measurement light is received in the second pixel region. As a result, the simultaneity of detection of the reference light and the measurement light can be secured, and the correction can be easily performed even when the stability of the light source is low. Furthermore, a mechanical movable portion for switching between the reference light and the measurement light becomes unnecessary, and maintainability and a sampling speed can be sufficiently secured. Moreover, since the exposure times of the first pixel region and the second pixel region can be adjusted independently, it is not necessary to introduce a mechanism or an optical system for adjusting signal intensity even in the case of measuring the film thicknesses of samples having different reflection intensities. Therefore, in this film thickness measurement method, in-line measurement of the film thickness can be stably performed.

**Advantageous Effects of Invention**

According to the present disclosure, in-line measurement of a film thickness can be stably performed.

**Brief Description of Drawings**

FIG. 1 is a schematic diagram illustrating a film thickness measurement device according to an embodiment of the present disclosure.
FIGS. 2(a) and 2(b) are schematic views illustrating end surface configurations of fiber ends of a first optical fiber and a second optical fiber.
FIGS. 3(a) and 3(b) are schematic views illustrating other examples of end surface configurations of the fiber ends of the first optical fiber and the second optical fiber.
FIG. 4 is a schematic view illustrating a state of forming a spectral image of reference light and a spectral image of measurement light in a detection unit.
FIG. 5 is a schematic view illustrating a configuration of a slit in an input surface of a spectroscopic unit.
FIG. 6 is a diagram illustrating an example of a CCD photodetector constituting the detection unit.
FIG. 7 is a diagram illustrating another example of the CCD photodetector constituting the detection unit.
FIG. 8 is a diagram illustrating another example of the CCD photodetector constituting the detection unit.
FIG. 9 is a diagram illustrating an example of a CMOS photodetector constituting the detection unit.
FIG. 10 is a flowchart illustrating a film thickness measurement method according to an embodiment of the present disclosure.
FIGS. 11(a) to (e) are schematic diagrams illustrating a state of dark subtraction correction.
FIG. 12 is a flowchart illustrating an example of a film thickness measurement method using the film thickness measurement device illustrated in FIG. 1.
FIG. 13 is a flowchart illustrating a process subsequent to FIG. 12.

**Description of Embodiments**

Hereinafter, a preferred embodiment of a film thickness measurement device and a film thickness measurement method according to one aspect of the present disclosure will be described in detail with reference to the drawings.

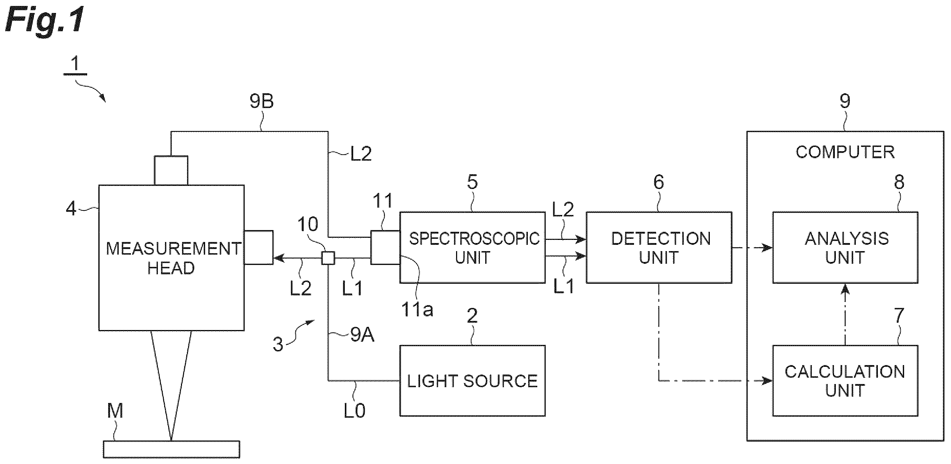

FIG. 1 is a schematic diagram illustrating a film thickness measurement device according to an embodiment of the present disclosure. A film thickness measurement device 1 illustrated in FIG. 1 is configured as a device that performs in-line measurement of the film thickness of a sample M in a film forming process of the sample M using, for example, a film forming chamber. Examples of the sample M include an optical film, a thin film for a display panel, and a thin film for a semiconductor wafer. The film thickness measurement device 1 includes a light source 2, an optical system 3, a measurement head 4, a spectroscopic unit 5, a detection unit 6, a calculation unit 7, and an analysis unit 8.

The light source 2 is a device that outputs light L0 toward the sample M. As the light source 2, for example, a white light source that outputs light including a wavelength range of 185 nm or more and 2000 nm or less is used. As the light source 2, for example, a light source (for example, a xenon flash lamp) that outputs pulsed light having a repetition frequency of 1 kHz or more is used. The light L0 is used as reference light L1 and measurement light L2 in the film thickness measurement device 1.

The optical system 3 is a system that guides the light L0, the reference light L1, and the measurement light L2 between the light source 2, the measurement head 4, and the spectroscopic unit 5. In the present embodiment, the optical system 3 includes a first optical fiber 9A and a second optical fiber 9B. The first optical fiber 9A is an optical fiber that guides the reference light L1 to the spectroscopic unit 5. The second optical fiber 9B is an optical fiber that guides the measurement light L2 to the spectroscopic unit 5.

In the present embodiment, the first optical fiber 9A is provided with a branching coupler 10. One end of the first optical fiber 9A branched by the coupler 10 is optically connected to the input terminal of the measurement head 4 and the other end is optically connected to the spectroscopic unit 5. One of the light L0 output from the light source 2 is directly input to the spectroscopic unit 5 as the reference light L1, and the other of the light L0 output from the light source 2 is input to the input terminal of the measurement head 4 as the measurement light L2.

The measurement head 4 is a portion that irradiates the sample M with the measurement light L2. The measurement head 4 includes, for example, a half mirror and a condenser lens. The measurement light L2 input from the other end of the first optical fiber 9A to the measurement head 4 is emitted to the sample M via the half mirror and the condenser lens. The measurement light L2 reflected by the sample M is input from the output terminal of the measurement head 4 to one end of the second optical fiber 9B via the condenser lens and the half mirror.

One end of the second optical fiber 9B is optically connected to the output terminal of the measurement head 4 and the other end is optically connected to the spectroscopic unit 5. The measurement light L2 output from the output terminal of the measurement head 4 is input to the spectroscopic unit 5 through the second optical fiber 9B. In the present embodiment, one end of the first optical fiber 9A and the other end of the second optical fiber 9B are integrated into a fiber end 11. That is, the reference light L1 passing through the first optical fiber 9A and the measurement light L2 passing through the second optical fiber 9B are input to the spectroscopic unit 5 via the common fiber end 11.

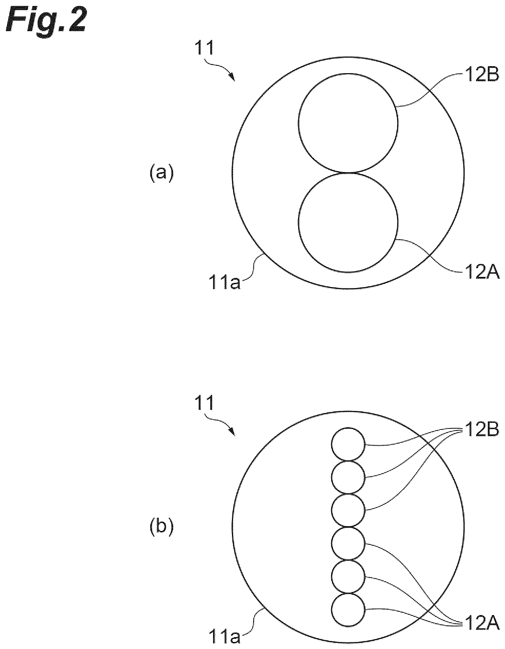

At the fiber end 11, a core 12A of the first optical fiber 9A and a core 12B of the second optical fiber 9B are bundled. FIG. 2(a) is a configuration example in a case where the cores 12A and 12B are each a single core. In the example of FIG. 2(a), on an end surface 11a of the fiber end 11, the core 12A of the first optical fiber 9A and the core 12B of the second optical fiber 9B are linearly arranged with the center of the end surface 11a interposed therebetween. FIG. 2(b) is a configuration example in which the cores 12A and 12B are each a bundle. In the example of FIG. 2(b), a plurality of the cores 12A of the first optical fiber 9A and a plurality of the cores 12B of the second optical fiber 9B are linearly arranged on the end surface 11a of the fiber end 11 with the center of the end surface 11a interposed therebetween.

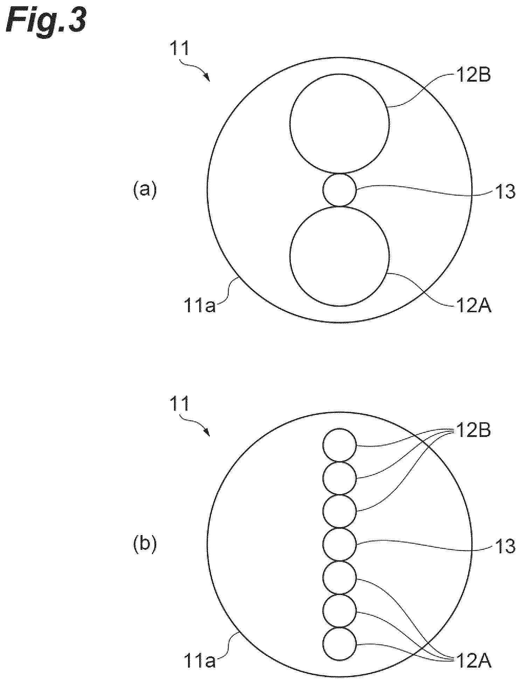

The fiber end 11 may be provided with a dummy core 13 that physically separates the core 12A of the first optical fiber 9A and the core 12B of the second optical fiber 9B. In the example of FIG. 3(a), on the end surface 11a of the fiber end 11, the dummy core 13 is located at the center of the end surface 11a of the fiber end 11, and the core 12A of the first optical fiber 9A and the core 12B of the second optical fiber 9B are linearly arranged with the dummy core 13 interposed therebetween. In the example of FIG. 3(b), on the end surface 11a of the fiber end 11, the dummy core 13 is located at the center of the end surface 11a of the fiber end 11, and a plurality of the cores 12A of the first optical fiber 9A and a plurality of the cores 12B of the second optical fiber 9B are linearly arranged with the dummy core 13 interposed therebetween.

The diameter of the dummy core 13 is not particularly limited, but in the examples of FIGS. 2(a) and 2(b), the diameter of the dummy core 13 is smaller than the core diameter of the first optical fiber 9A and the core diameter of the second optical fiber 9B, which are single cores. Furthermore, in the examples of FIGS. 3(a) and 3(b), the diameter of the dummy core 13 is the same as the core diameter of the first optical fiber 9A and the core diameter of the second optical fiber 9B, which are bundles.

The spectroscopic unit 5 is a portion that spectrally disperses each of the reference light L1 output from the light source 2 and the measurement light L2 output from the light source 2 and reflected by the sample M. As the spectroscopic unit 5, a spectrometer having good imaging properties is used. Examples of the spectrometer constituting the spectroscopic unit 5 include a Czerny-Turner-type spectrometer capable of astigmatism correction, a Dyson-type spectrometer, and an Offner-type spectrometer.

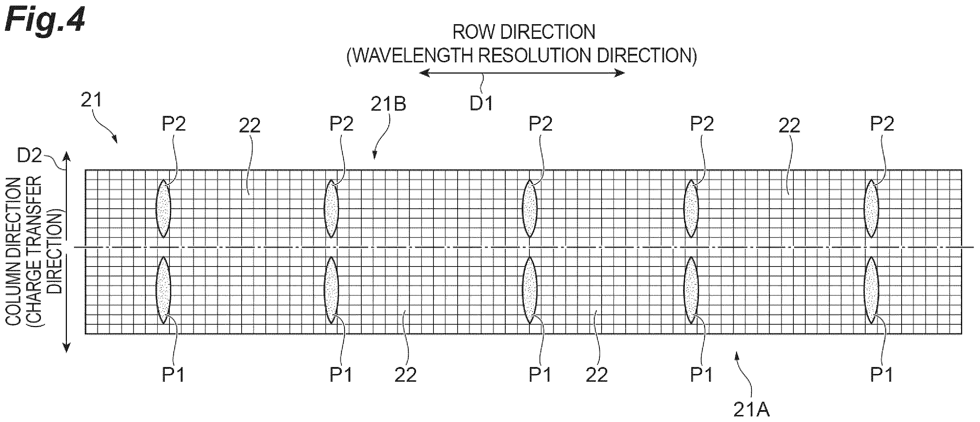

For example, as illustrated in FIG. 4, the spectroscopic unit 5 wavelength-resolves the reference light L1 and the measurement light L2 in a first direction D1, and forms spectral images P1 and P2 for each wavelength in a second direction D2 intersecting the first direction D1. Here, the first direction D1 and the second direction D2 are directions orthogonal to each other. In the example of FIG. 4, the first direction D1 is along the row direction of a pixel region 21 constituting the detection unit 6, and the second direction D2 is along the column direction of the pixel region 21.

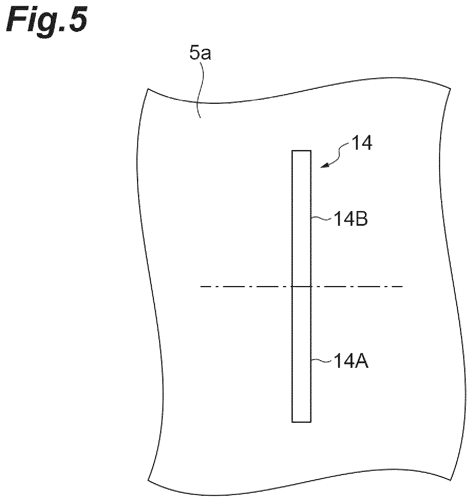

As illustrated in FIG. 5, an input surface 5a of the spectroscopic unit 5 is provided with a slit 14 facing the end surface 11a of the fiber end 11. The extending direction of the slit 14 coincides with the arrangement direction of the cores 12A of the first optical fiber 9A and the cores 12B of the second optical fiber 9B on the end surface 11a of the fiber end 11. Furthermore, the center of the slit 14 in the extending direction faces the center of the end surface 11a of the fiber end 11. Therefore, a half portion of the slit 14 facing the core 12A of the first optical fiber 9A is a region 14A to which the reference light L1 is input, and a half portion of the slit 14 facing the core 12B of the second optical fiber 9B is a region 14B to which the measurement light L2 is input.

The detection unit 6 is a portion that detects the spectral image P1 of the reference light L1 and the spectral image P2 of the measurement light L2 dispersed by the spectroscopic unit 5. As illustrated in FIG. 4, the detection unit 6 includes the pixel region 21 that captures the spectral images P1 and P2. In the pixel region 21, a plurality of pixels 22 are arranged in the row direction and the column direction. In the example of FIG. 4, the row direction corresponding to the first direction D1 is along the wavelength resolution direction of the spectral images P1 and P2 by the spectroscopic unit 5, and the column direction corresponding to the second direction D2 is along the charge transfer direction of each pixel 22. Each pixel 22 receives the wavelength-resolved spectral images P1 and P2, and generates and accumulates charges according to the intensity of light.

In the example of FIG. 4, the pixel region 21 has a horizontally long rectangular region in which the number of pixels in the row direction is larger than the number of pixels in the column direction. The pixel region 21 includes a first pixel region 21A and a second pixel region 21B divided in the second direction D2. Here, the first pixel region 21A and the second pixel region 21B are divided at the center in the column direction. That is, in the pixel region 21, the pixel 22 on one side of the center in the column direction belongs to the first pixel region 21A, and the pixel 22 on the other side of the center in the column direction belongs to the second pixel region 21B.

A first exposure time T1 of each pixel 22 in the first pixel region 21A and a second exposure time T2 of each pixel 22 in the second pixel region 21B can be set independently of each other. The exposure time ratio T2/T1 between the first pixel region 21A and the second pixel region 21B is set according to the type of a film in the sample M or the like. In the present embodiment, the first exposure time T1 of the first pixel region 21A for detecting the spectral image P1 of the reference light L1 is constant, and the second exposure time T2 of the second pixel region 21B for detecting the spectral image P2 of the measurement light L2 is adjusted according to the type of a film in the sample M or the like.

The exposure times T1 and T2 are set on the basis of the reflection intensity or reflectance of the measurement light L2 in the sample M. For example, when the reflection intensity or reflectance of the measurement light L2 in the sample M is small, the second exposure time T2 of each pixel 22 in the second pixel region 21B is only required to be increased. As a result, the S/N ratio of the reference light L1 to the detection of the spectral image P1 and the S/N ratio of the measurement light L2 to the detection of the spectral image can be matched to the same level. From the viewpoint of sufficiently securing the S/N ratio with respect to the detection of the spectral image of the measurement light L2, as an example, the second exposure time T2 is set such that the peak intensity of spectrum data (measurement data Ssig described later) of the measurement light L2 is 80% or more and less than 100% of the saturation intensity in the second pixel region 21B.

In the present embodiment, as described above, a half portion of the slit 14 of the input surface 5a of the spectroscopic unit 5, the half portion facing the core 12A of the first optical fiber 9A, is a region 14A to which the reference light L1 is input, and a half portion of the slit 14 facing the core 12B of the second optical fiber 9B is a region 14B to which the measurement light L2 is input. Therefore, in the spectroscopic unit 5, the optical path of the reference light L1 and the optical path of the measurement light L2 are spatially separated, and in the pixel region 21, the spectral image P1 of the reference light L1 and the spectral image P2 of the measurement light L2 are separated in the column direction.

In the example of FIG. 4, the five spectral images P1 of the reference light L1 wavelength-resolved by the spectroscopic unit 5 are formed in the first pixel region 21A. Furthermore, the five spectral images P2 of the measurement light L2 wavelength-resolved by the spectroscopic unit 5 are formed in the second pixel region 21B at the same timing as the formation of the spectral image P1 in the first pixel region 21A. Each of the spectral images P1 and P2 extends linearly in the column direction of the pixel 22 and forms an image in a respective one of the first pixel region 21A and the second pixel region 21B in a state of being separated from each other in the row direction. The detection unit 6 generates spectral spectrum data corresponding to each of the spectral images P1 and P2, and outputs the spectral spectrum data to the analysis unit 8.

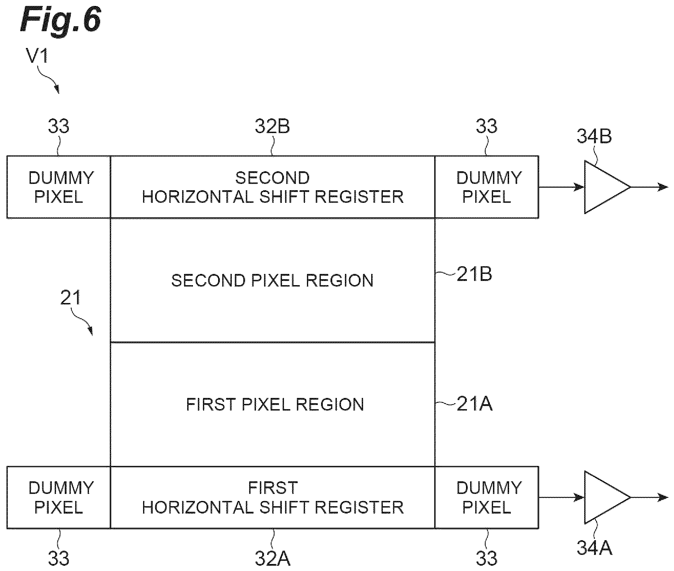

The detection unit 6 can be configured by, for example, CCD photodetection or a CMOS photodetector. FIG. 6 is a diagram illustrating an example of a CCD photodetector constituting the detection unit. A CCD photodetector V1 illustrated in FIG. 6 includes the pixel region 21 including the first pixel region 21A and the second pixel region 21B described above, a first horizontal shift register 32A corresponding to the first pixel region 21A, a second horizontal shift register 32B corresponding to the second pixel region 21B, and a plurality of dummy pixels 33.

The charge generated and accumulated in each pixel 22 of the first pixel region 21A is transferred to the first horizontal shift register 32A. In the transfer, the charges of the pixels 22 in each column are added together for each column in the first horizontal shift register 32A (vertical transfer), and the charges added for each column are sequentially read out from the first horizontal shift register 32A (horizontal transfer). A voltage value corresponding to the amount of charges read out from the first horizontal shift register 32A is output from an amplifier 34A. The voltage value output from the amplifier 34A is converted into a digital value by an AD converter. As a result, spectrum data (reference data Sref) based on the detection result of the spectral image P1 of the reference light L1 is obtained.

The charge generated and accumulated in each pixel 22 of the second pixel region 21B is transferred to the second horizontal shift register 32B. In the transfer, the charges of the pixels 22 in each column are added together for each column in the second horizontal shift register 32B (vertical transfer), and the charges added for each column are sequentially read out from the second horizontal shift register 32B (horizontal transfer). A voltage value corresponding to the amount of charges read out from the second horizontal shift register 32B is output from an amplifier 34B. The voltage value output from the amplifier 34B is converted into a digital value by an AD converter. As a result, spectrum data (measurement data Ssig) based on the detection result of the spectral image P2 of the measurement light L2 is obtained.

In the CCD photodetector V1, the first exposure time T1 of the first pixel region 21A and the second exposure time T2 of the second pixel region 21B can be set by, for example, an electronic shutter. The electronic shutter can be implemented by using, for example, an anti-blooming gate. The output operation of the reference data Sref and the output operation of the measurement data Ssig are independently controlled, but are preferably synchronized with each other. In this case, it is possible to prevent the signal instructing one output operation from overlapping the output signal of the other output operation as noise.

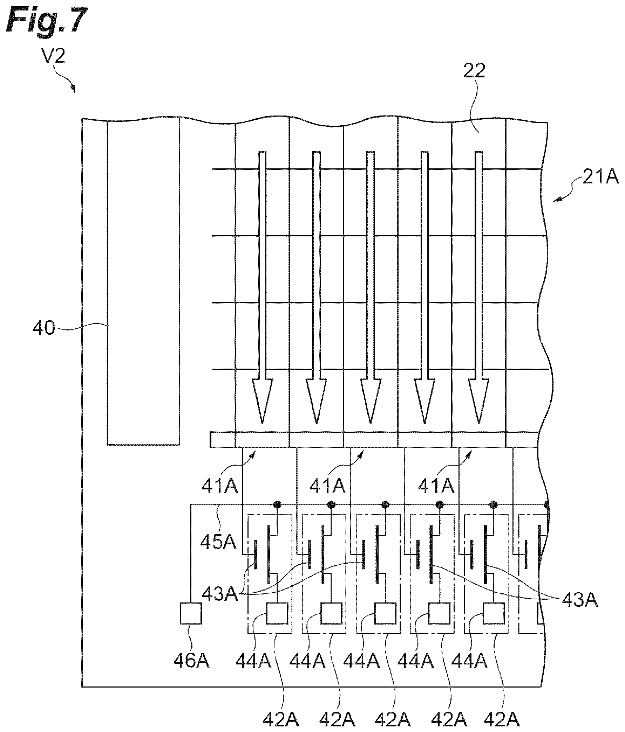

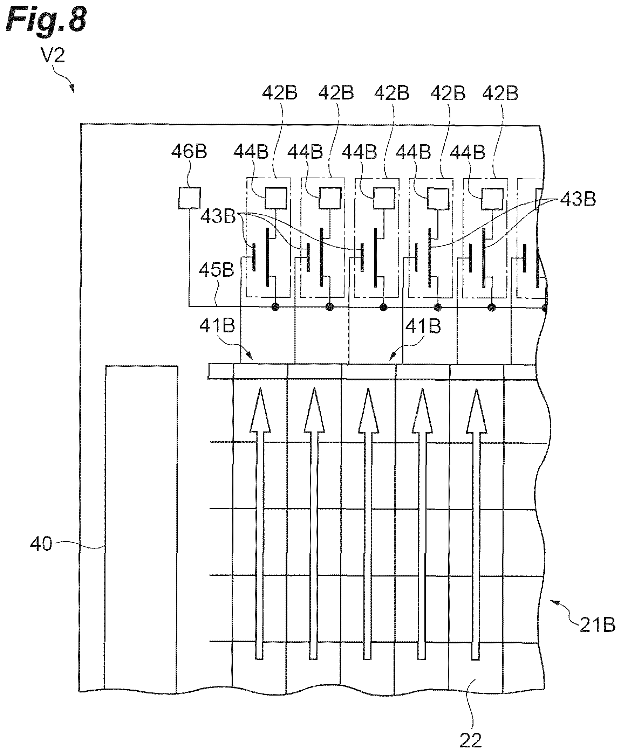

FIGS. 7 and 8 are diagrams illustrating another example of the CCD photodetector constituting the detection unit. A CCD photodetector V2 illustrated in FIGS. 7 and 8 includes a conversion substrate 40, a first accumulation unit 41A in which charges generated in each column of the first pixel region 21A are accumulated, a second accumulation unit 41B in which charges generated in each column of the second pixel region 21B are accumulated, a first readout unit 42A that outputs an electrical signal of each column according to the magnitude of the charges accumulated in the first accumulation unit 41A, and a second readout unit 42B that outputs an electrical signal of each column according to the magnitude of the charges accumulated in the second accumulation unit 41B.

The conversion substrate 40 is arranged along the column direction beside the pixel region 21. A voltage signal (drive signal) for controlling transfer of charges of the pixel 22 is supplied to the conversion substrate 40. The charge of the pixel 22 of each column belonging to the first pixel region 21A is transferred to the first accumulation unit 41A in each column on the basis of the voltage signal supplied to the conversion substrate 40. The charge of the pixel 22 of each column belonging to the second pixel region 21B is transferred to the second accumulation unit 41B in each column on the basis of the voltage signal supplied to the conversion substrate 40.

The first accumulation unit 41A is arranged for each column at the end portion in the column direction of the first pixel region 21A, and accumulates charges generated in the pixels 22 of each column of the first pixel region 21A. The second accumulation unit 41B is arranged for each column at the end portion in the column direction of the second pixel region 21B, and accumulates charges generated in the pixels 22 of each column of the second pixel region 21B. The first readout unit 42A is arranged at the subsequent stage of the first accumulation unit 41A at the end portion in the column direction of the first pixel region 21A, and the second readout unit 42B is arranged at the subsequent stage of the second accumulation unit 41B at the end portion in the column direction of the second pixel region 21B.

As illustrated in FIG. 7, the first readout unit 42A includes, for example, a transistor 43A and a bonding pad 44A for signal output. A control terminal (gate) of the transistor 43A is electrically connected to the first accumulation unit 41A. One current terminal (drain) of the transistor 43A is electrically connected to a bonding pad 46A via a wiring 45A provided in common over each column of the first pixel region 21A. A voltage of a predetermined magnitude is applied to the bonding pad 46A at all times.

The other current terminal (source) of the transistor 43A is electrically connected to the bonding pad 44A for signal output. A voltage corresponding to the first electrical signal output from the first accumulation unit 41A is applied to the control terminal of the transistor 43A. From the other current terminal of the transistor 43A, a current corresponding to the applied voltage is output and taken out to the outside via the bonding pad 44A for signal output.

As illustrated in FIG. 8, the second readout unit 42B includes, for example, a transistor 43B and a bonding pad 44B for signal output. A control terminal (gate) of the transistor 43B is electrically connected to the second accumulation unit 41B. One current terminal (drain) of the transistor 43B is electrically connected to a bonding pad 46B via a wiring 45B provided in common over each column of the second pixel region 21B. A voltage of a predetermined magnitude is applied to the bonding pad 46B at all times.

The other current terminal (source) of the transistor 43B is electrically connected to the bonding pad 44B for signal output. A voltage corresponding to the second electrical signal output from the second accumulation unit 41B is applied to the control terminal of the transistor 43B. From the other current terminal of the transistor 43B, a current corresponding to the applied voltage is output and taken out to the outside via the bonding pad 44B for signal output.

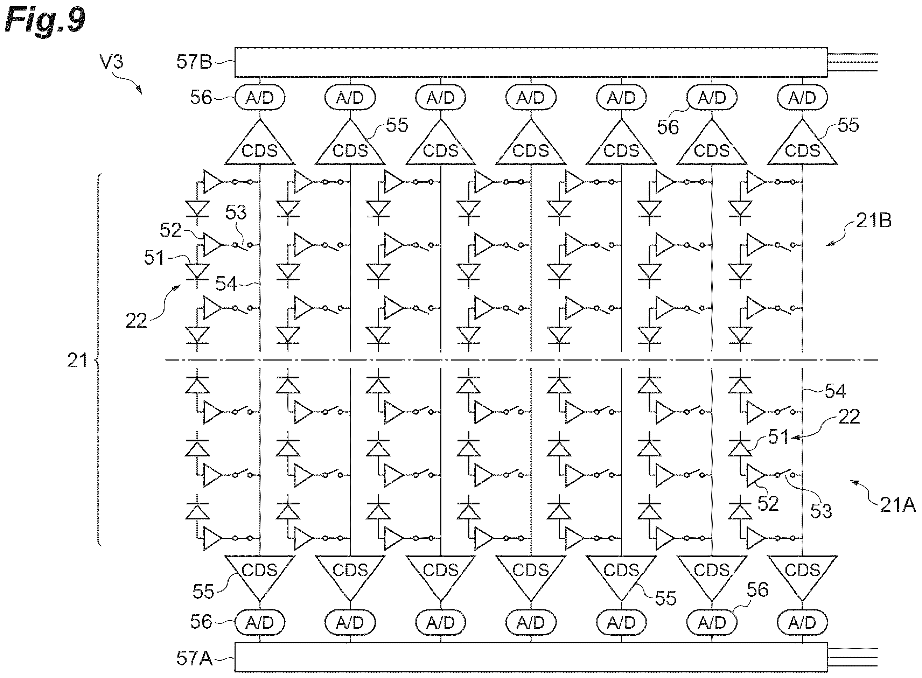

FIG. 9 is a diagram illustrating an example of a CMOS photodetector constituting the detection unit. In a CMOS photodetector V3 illustrated in the drawing, each pixel 22 constituting the pixel region 21 includes a photodiode 51 and an amplifier 52. The photodiode 51 accumulates electrons (photoelectrons) generated by light input as charges. The amplifier 52 converts the charge accumulated in the photodiode 51 into an electrical signal and amplifies the converted signal.

The electrical signal amplified by the amplifier 52 is transferred to a vertical signal line 54 connecting the pixels 22 in the row direction to each other by switching a selection switch 53 of each pixel 22. A correlated double sampling (CDS) circuit 55 is disposed in each vertical signal line 54. The CDS circuit 55 reduces readout noise between the respective pixels 22 and temporarily stores the electrical signal transferred to the vertical signal line 54. The CDS circuit 55 is electrically connected to a conversion unit 56. The conversion unit 56 converts the voltage value output from each amplifier 52 of a respective one of the pixels 22 into a digital value. In the present embodiment, the conversion unit 56 includes an A/D converter. The A/D converter converts the voltage value stored in the CDS circuit 55 into a digital value (pixel value).

The CMOS photodetector V3 includes a first readout unit 57A that outputs charges generated in each column of the first pixel region 21A and a second readout unit 57B that outputs charges generated in each column of the second pixel region 21B. The first readout unit 57A is connected to the A/D converter corresponding to the vertical signal line 54 of each pixel 22 belonging to the first pixel region 21A. The first readout unit 57A outputs a pixel value of each pixel 22 belonging to the first pixel region 21A. The second readout unit 57B is connected to the A/D converter corresponding to the vertical signal line 54 of each pixel 22 belonging to the second pixel region 21B. The second readout unit 57B outputs a pixel value of each pixel 22 belonging to the second pixel region 21B.

The calculation unit 7 and the analysis unit 8 are physically configured by, for example, a computer 9 including a processor such as a CPU and a storage medium such as a RAM and a ROM. The computer 9 may be a smartphone or a tablet terminal integrally provided with a display unit and an input unit. The computer 9 may be configured by a microcomputer or a field-programmable gate array (FPGA).

The calculation unit 7 is a unit that calculates a conversion coefficient K for converting the detection value of the intensity for each wavelength of the reference light L1 into a value corresponding to the intensity for each wavelength of the measurement light L2 from the reference sample. The conversion coefficient K is a coefficient used for correction of the reference light L1. Specifically, the conversion coefficient K is a coefficient for calculating a value corresponding to the intensity for each wavelength of the measurement light L2 from the reference sample for each measurement without using the reference sample when the film thickness of the sample M is measured. The conversion coefficient K is calculated using the exposure time ratio T2/T1 between the first pixel region 21A and the second pixel region 21B. Details will be described later.

The analysis unit 8 is a unit that analyzes the film thickness of the sample M on the basis of the reference data $S_{ref}$ obtained from the detection result of the spectral image P1 of the reference light L1 and the measurement data $S_{sig}$ obtained from the detection result of the spectral image P2 of the measurement light L2. The analysis unit 8 calculates the reflectance of the sample M for each wavelength on the basis of the reference data $S_{ref}$ and the measurement data $S_{sig}$, and analyzes the film thickness of the sample M on the basis of the calculation result. In the present embodiment, the spectral reflectance data $R_{sig}$ of the sample M is used for analyzing the film thickness of the sample M. The conversion coefficient K described above is used for calculating the spectral reflectance data $R_{sig}$.

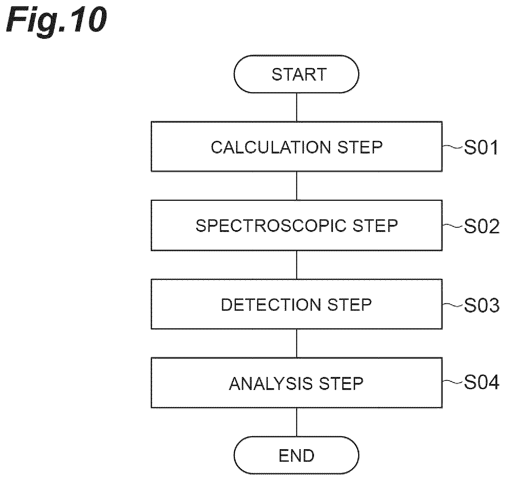

Next, a film thickness measurement method according to an embodiment of the present disclosure will be described. FIG. 10 is a flowchart illustrating a film thickness measurement method according to an embodiment of the present disclosure. As illustrated in FIG. 10, the film thickness measurement method includes a calculation step S01, a spectroscopic step S02, a detection step S03, and an analysis step S04.

The calculation step S01 is a step of calculating the conversion coefficient K used in the analysis step S04. The spectroscopic step S02 is a step of spectrally dispersing each of the reference light L1 output from the light source 2 and the measurement light L2 output from the light source 2 and reflected by the sample M. The detection step S03 is a step of detecting the spectral image P1 of the reference light L1 and the spectral image P2 of the measurement light L2 dispersed in the spectroscopic step S02. The analysis step S04 is a step of analyzing the film thickness of the sample M on the basis of the reference data $S_{ref}$ obtained from the detection result of the spectral image P1 of the reference light L1 and the measurement data $S_{sig}$ obtained from the detection result of the spectral image P2 of the measurement light L2.

In the present embodiment, the film thickness measurement method including step S01 to step S04 is performed using the film thickness measurement device 1 described above. Here, an aspect will be exemplified in which dark calculation correction is first performed in the film thickness measurement device 1, and then measurement of the film thickness of the sample M is performed.

In the detection unit 6, even when there is no input of the reference light L1 and the measurement light L2, a weak signal may be output. This weak signal is also called dark current. The dark current is a use that requires calibration when the intensity of light is detected by the detection unit 6. In addition to the dark current, the signal output from the detection unit 6 can include a signal caused by disturbance light such as light emitted from indoor illumination (hereinafter, these are collectively referred to as dark signals). Therefore, in the film thickness measurement device 1, in order to accurately acquire the reference data $S_{ref}$ based on the spectral image P1 of the reference light L1 and the measurement data $S_{sig}$ based on the spectral image P2 of the measurement light L2, it is necessary to subtract the spectrum data of the dark signal from the spectral spectrum data corresponding to each of the spectral images P1 and P2.

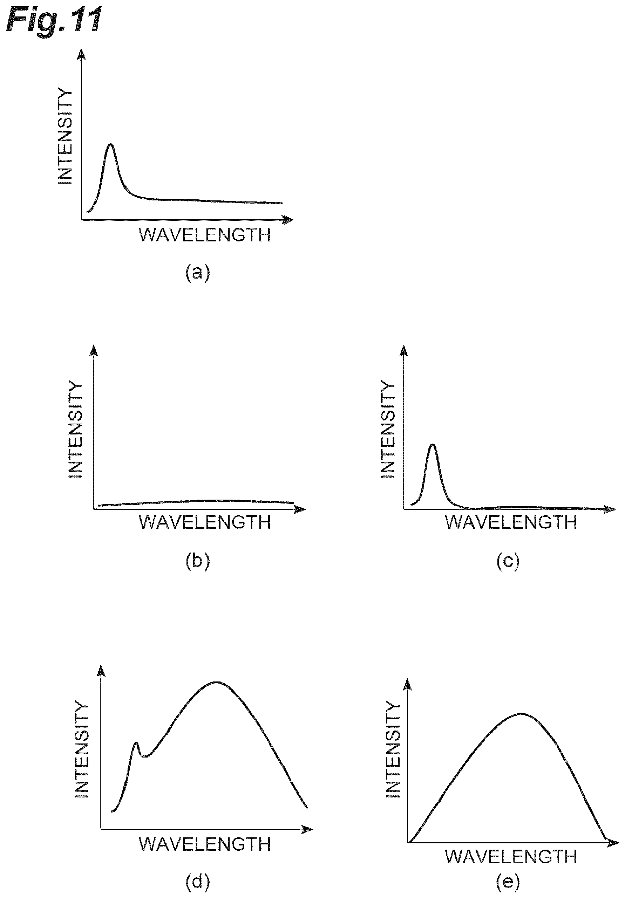

FIGS. 11(a) to (e) are schematic diagrams illustrating a state of the dark correction calculation. In the dark correction calculation, first, spectrum data of the dark signal is acquired by the detection unit 6 in a state where the output of the light source 2 is turned off. For example, as illustrated in FIG. 11(a), the spectrum data of the dark signal includes a white noise component and a noise component having a peak in a specific wavelength region. The white noise component is a noise component due to dark current (see FIG. 11(b)). The noise component having a peak in a specific wavelength region is a noise component caused by disturbance light (see FIG. 11(c)).

Next, spectrum data of the reference light L1 is acquired by the detection unit 6 in a state where the output of the light source 2 is turned on. For example, as illustrated in FIG. 11(d), the spectrum data is obtained by adding the spectrum data of the dark signal to the spectrum data of the reference light L1. By subtracting the spectrum data of the dark signal illustrated in FIG. 11(a) from the waveform in FIG. 11(d), spectrum data of the reference light L1 from which the effect of the dark signal is eliminated is obtained (see FIG. 11(e)). By performing similar processing on the measurement light L2, spectrum data of the measurement light L2 from which the effect of the dark signal is eliminated is obtained.

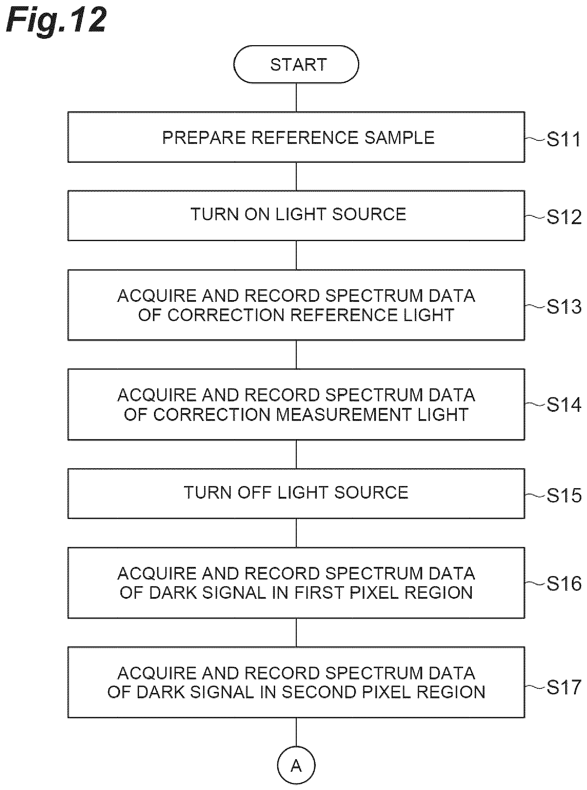

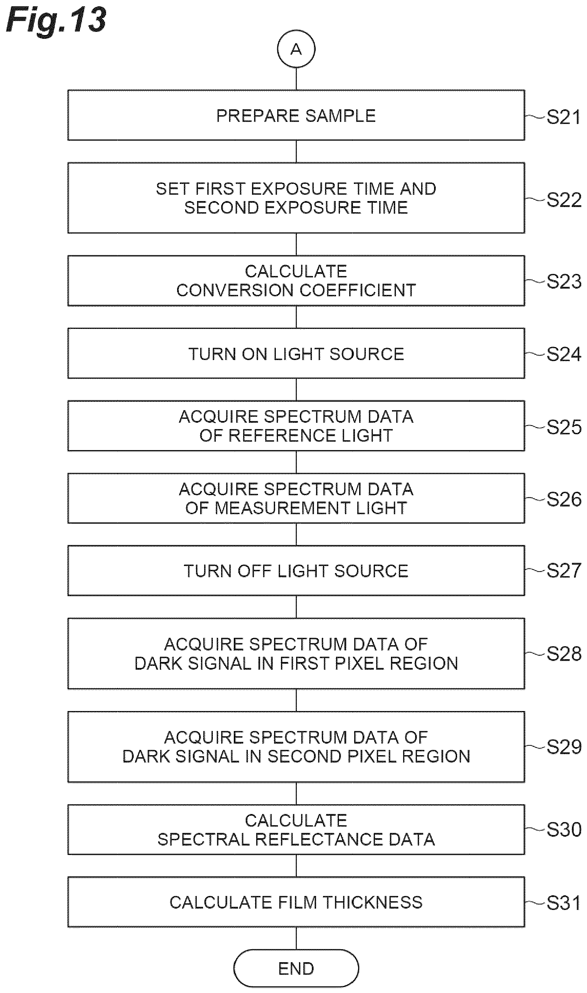

FIG. 12 is a flowchart illustrating an example of a film thickness measurement method using the film thickness measurement device illustrated in FIG. 1. Furthermore, FIG. 13 is a flowchart illustrating a process subsequent to FIG. 12. As illustrated in FIG. 12, in this film thickness measurement method, first, a reference sample (not illustrated) with spectral reflectance data that is known is prepared (step S11), and the measurement head 4 is set with respect to the reference sample. Next, the light source 2 is turned on, and the reference light L1 and the measurement light L2 are output from the light source 2 (step S12). Here, for convenience of distinction from the reference light L1 and the measurement light L2 used for measuring the film thickness of the sample M, the reference light L1 and the measurement light L2 for the reference sample are referred to as correction reference light L1' and correction measurement light L2', respectively.

The correction reference light L1' is wavelength-resolved by the spectroscopic unit 5, and the spectral image is detected in the first pixel region 21A of the detection unit 6, whereby spectrum data (correction reference data $C_{ref}$) of the correction reference light L1' is acquired and recorded (step S12). Furthermore, the correction measurement light L2' is wavelength-resolved by the spectroscopic unit 5, and the spectral image is detected in the second pixel region 21B of the detection unit 6, whereby spectrum data (correction measurement data $C_{sig}$) of the correction measurement light L2' is acquired and recorded (step S13).

The pixel region 21 of the detection unit 6 is divided into the first pixel region 21A and the second pixel region 21B (see FIG. 4). Therefore, the correction reference data $C_{ref}$ and the correction measurement data $C_{sig}$ are acquired at the same timing (that is, step S12 and step S13 are performed simultaneously). The first exposure time T1 of the first pixel region 21A when detecting the spectral image of the correction reference light L1' and the second exposure time T2 of the second pixel region 21B when detecting the spectral image of the correction measurement light L2' are set to be equal to each other. The correction reference data $C_{ref}$ and the correction measurement data $C_{sig}$ are recorded by the calculation unit 7.

After the acquisition of the correction reference data $C_{ref}$ and the correction measurement data $C_{sig}$, the light source 2 is turned off (step S15). After the light source 2 is turned off, spectrum data (first correction dark signal data $D_{ref}$) of the dark signal output from the first pixel region 21A of the detection unit 6 is acquired and recorded (step S16). Furthermore, spectrum data (second correction dark signal data $D_{sig}$) of the dark signal output from the second pixel region 21B of the detection unit 6 is acquired and recorded (step S17).

The first correction dark signal data $D_{ref}$ and the second correction dark signal data $D_{sig}$ are acquired at the same timing as in the case of acquiring the correction reference data $C_{ref}$ and the correction measurement data $C_{sig}$ (that is, step S16 and step S17 are performed simultaneously). The first correction dark signal data $D_{ref}$ and the second correction dark signal data $D_{sig}$ are recorded by the calculation unit 7.

Next, as illustrated in FIG. 13, a sample M to be measured for the film thickness is prepared (step S21), and the measurement head 4 is set on the sample M. After the setting of the measurement head 4, the first exposure time T1 of the first pixel region 21A and the second exposure time T2 of the second pixel region 21B are each set (step S22). In the present embodiment, while the first exposure time T1 is constant regardless of the type of the sample M, the second exposure time T2 is set for each sample M such that the peak intensity of the measurement data $S_{sig}$ is 80% or more and less than 100% of the saturation intensity in the second pixel region 21B.

Following the setting of the exposure times T1 and T2, the calculation unit 7 calculates the conversion coefficient K (step S23: calculation step). The conversion coefficient K is a coefficient that converts the detection value of the intensity for each wavelength of the reference light L1 into a value corresponding to the intensity for each wavelength of the measurement light L2 from the reference sample. The conversion coefficient K is calculated by the following equation (1) using the correction reference data $C_{ref}$, the correction measurement data $C_{sig}$, the first correction dark signal data $D_{ref}$, the second correction dark signal data $D_{sig}$, the reflectance data $R_{Ref}(\lambda)$ of the reference sample, and the exposure time ratio T2/T1. The calculated conversion coefficient K is recorded in the calculation unit 7.

$$K = (C_{sig} - D_{sig})/(R_{ref}(\lambda) \times (C_{ref} - D_{ref}) \times (T2/T1))...\ (1)$$

After the calculation of the conversion coefficient K, the light source 2 is turned on, and the reference light L1 and the measurement light L2 are output from the light source 2 (step S24). The reference light L1 is wavelength-resolved by the spectroscopic unit 5, and the spectral image P is detected in the first pixel region 21A of the detection unit 6 at the first exposure time T1, whereby spectrum data (reference data $S_{ref}$) of the reference light L1 is acquired and recorded (step S25: spectroscopic step/detection step). Furthermore, the measurement light L2 is wavelength-resolved by the spectroscopic unit 5, and the spectral image P is detected in the second pixel region 21B of the detection unit 6 at the second exposure time T2, whereby spectrum data (measurement data $S_{sig}$) of the measurement light L2 is acquired and recorded (step S26: spectroscopic step/detection step).

As in the case of acquiring the correction reference data $C_{ref}$ and the correction measurement data $C_{sig}$, the reference data $S_{ref}$ and the measurement data $S_{sig}$ are acquired at the same timing (that is, step S12 and step S13 are performed simultaneously). The reference data $S_{ref}$ and the measurement data $S_{sig}$ are recorded by the analysis unit 8.

After the acquisition of the reference data $S_{ref}$ and the measurement data $S_{sig}$, the light source 2 is turned off (step S27). After the light source 2 is turned off, spectrum data (first dark signal data $D'_{ref}$) of the dark signal output from the first pixel region 21A of the detection unit 6 is acquired and recorded (step S28). Furthermore, spectrum data (second dark signal data $D'_{sig}$) of the dark signal output from the second pixel region 21B of the detection unit 6 is acquired and recorded (step S29).

The first dark signal data $D'_{ref}$ and the second dark signal data $D'_{sig}$ are acquired at the same timing as in the case of acquiring the reference data $S_{ref}$ and the measurement data $S_{sig}$ (that is, step S28 and step S29 are performed simultaneously). The first dark signal data $D'_{ref}$ and the second dark signal data $D'_{sig}$ are recorded by the analysis unit 8.

After the acquisition of the reference data $S_{ref}$ and the measurement data $S_{sig}$ and the acquisition of the first dark signal data $D'_{ref}$ and the second dark signal data $D'_{sig}$, the analysis unit 8 calculates spectral reflectance data $R_{sig}$ of the sample M (step S30: analysis step). The spectral reflectance data $R_{sig}$ is calculated by the following equation (2) using the reference data $S_{ref}$, the measurement data $S_{sig}$, the first dark signal data $D'_{ref}$, the second dark signal data $D'_{sig}$, and the conversion coefficient K. The analysis unit 8 calculates the film thickness of the sample M on the basis of the calculated spectral reflectance data $R_{sig}$ (step S31: analysis step).

$$R_{sig} = (S_{sig} - D'_{sig})/((S_{ref} - D'_{ref}) \times K)...\ (2)$$

As described above, in the film thickness measurement device 1 and the film thickness measurement method according to the present embodiment, the reference light L1 and the measurement light L2 are wavelength-resolved in the first direction D1, and the spectral image for each wavelength is formed in the second direction D2 intersecting the first direction D1. Furthermore, the pixel region 21 is divided in the second direction D2 into the first pixel region 21A and the second pixel region 21B, the spectral image P1 of the reference light L1 is received in the first pixel region 21A, and the spectral image P2 of the measurement light L2 is received in the second pixel region 21B.

As a result, the simultaneity of detection of the reference light L1 and the measurement light L2 can be secured, and the correction can be easily performed even when the stability of the light source 2 is low. Furthermore, a mechanical movable portion for switching between the reference light L1 and the measurement light L2 becomes unnecessary, and maintainability and a sampling speed can be sufficiently secured. Moreover, since the exposure times T1 and T2 of the first pixel region 21A and the second pixel region 21B can be adjusted independently, it is not necessary to introduce a mechanism or an optical system for adjusting the signal intensity even in the case of measuring the film thicknesses of samples M having different reflection intensities. Therefore, in this film thickness measurement device 1 and the film thickness measurement method, in-line measurement of the film thickness can be stably performed.

In the present embodiment, the detection unit 6 can be configured by the CCD photodetector V1 including: the first horizontal shift register 32A to which a charge generated in each column of the first pixel region 21A is transferred; and the second horizontal shift register 32B to which a charge generated in each column of the second pixel region 21B is transferred. With such a configuration, reading out the charge of each pixel 22 corresponding to the spectral image P1 of the reference light L1 received in the first pixel region 21A and reading out the charge of each pixel 22 corresponding to the spectral image P2 of the measurement light L2 received in the second pixel region 21B can be performed in parallel. Furthermore, by using the CCD photodetector V1, it is possible to avoid an increase in readout noise when the charges generated in the pixels 22 of each column are read out.

In the present embodiment, the detection unit 6 can be configured by the CCD photodetector V2 including: the first accumulation unit 41A in which the charge generated in each column of the first pixel region 21A are accumulated; the second accumulation unit 41B in which the charge generated in each column of the second pixel region 21B are accumulated; the first readout unit 42A that outputs an electrical signal of each column corresponding to the magnitude of the charge accumulated in the first accumulation unit 41A; and the second readout unit 42B that outputs an electrical signal of each column according to the magnitude of the charge accumulated in the second accumulation unit 41B. Also in such a configuration, reading out the charge of each pixel 22 corresponding to the spectral image P1 of the reference light L1 received in the first pixel region 21A and reading out the charge of each pixel 22 corresponding to the spectral image P2 of the measurement light L2 received in the second pixel region 21B can be performed in parallel. Furthermore, by using the CCD photodetector V2, it is possible to avoid an increase in readout noise when the charges generated in the pixels of each column are read out.

In the present embodiment, the detection unit 6 can be configured by the CMOS photodetector V3 including: the first readout unit 57A that outputs the charge generated in each column of the first pixel region 21A; and the second readout unit 57B that outputs the charge generated in each column of the second pixel region 21B. Also in such a configuration, reading out the charge of each pixel 22 corresponding to the spectral image P1 of the reference light L1 received in the first pixel region 21A and reading out the charge of each pixel 22 corresponding to the spectral image P2 of the measurement light L2 received in the second pixel region 21B can be performed in parallel.

In the present embodiment, as in the CCD photodetector V1, the CCD photodetector V2, and the CMOS photodetector V3 described above, the pixel region 21 of the single sensor is divided into the first pixel region 21A and the second pixel region 21B, and the reference light L1 and the measurement light L2 are detected. According to such a configuration, as compared with a case where each of the reference light L1 and the measurement light L2 are detected using a respective one of two sensors, the control circuit only needs to be a single unit, so that the hardware configuration of the film thickness measurement device 1 can be simplified. Furthermore, since the first pixel region 21A and the second pixel region 21B are spatially close to each other, it is possible to avoid complication of optical design of the optical system 3 and the spectroscopic unit 5. Moreover, since thermal or optical drift can be shared between the first pixel region 21A and the second pixel region 21B, cancellation of the effect of drift is easy in design.

In the present embodiment, the film thickness measurement device 1 includes the first optical fiber 9A that guides the reference light L1 to the spectroscopic unit 5, the second optical fiber 9B that guides the measurement light L2 to the spectroscopic unit 5, and the fiber end 11 in which the core 12A of the first optical fiber 9A and the core 12B of the second optical fiber 9B are bundled. Then, the arrangement direction of the cores 12A of the first optical fiber 9A and the cores 12B of the second optical fiber 9B at the fiber end 11 coincides with the extending direction of the slit 14 on the input surface 5a of the spectroscopic unit 5. According to such a configuration, the spectral image P1 of the reference light L1 formed in the first pixel region 21A and the spectral image P2 of the measurement light L2 formed in the second pixel region 21B can be suitably separated. Therefore, crosstalk between the reference light L1 and the measurement light L2 can be suppressed.

In the present embodiment, it is possible to adopt a configuration in which the dummy core 13 that physically separates the core 12A of the first optical fiber 9A and the core 12B of the second optical fiber 9B is provided at the fiber end 11. In this case, the spectral image P1 of the reference light L1 formed in the first pixel region 21A and the spectral image P2 of the measurement light L2 formed in the second pixel region 21B can be more reliably separated. Therefore, crosstalk between the reference light L1 and the measurement light L2 can be more effectively suppressed.

In the present embodiment, the film thickness measurement device 1 includes the calculation unit 7 that calculates the conversion coefficient K for converting the detection value of the intensity for each wavelength of the reference light L1 into a value corresponding to the intensity for each wavelength of the measurement light L2 (correction measurement light L2') from the reference sample. The calculation unit 7 calculates the conversion coefficient K using the exposure time ratio T2/T1 between the first pixel region 21A and the second pixel region 21B. Then, the analysis unit 8 calculates the reflectance for each wavelength of the sample M on the basis of the detection value of the intensity for each wavelength of the reference light L1 and the value corresponding to the intensity for each wavelength of the measurement light L2 from the reference sample obtained by the conversion coefficient K. As a result, when the film thickness of the sample M is measured, a value corresponding to the intensity for each wavelength of the correction measurement light L2' from the reference sample can be calculated for each measurement on the basis of the detection value of the intensity for each wavelength of the measurement light L2 and the conversion coefficient K without using the reference sample. Therefore, even when the intensity of the measurement light L2 varies for each wavelength, the reflectance of the sample M for each wavelength can be accurately measured, and the accuracy of the film thickness measurement can be improved.

The present disclosure is not limited to the above embodiment. For example, in FIGS. 3(a) and 3(b) described above, although the dummy core 13 is provided to suppress the crosstalk between the reference light L1 and the measurement light L2, the crosstalk between the reference light L1 and the measurement light L2 can be suppressed by setting the pixel region 21 instead of the configuration of the fiber end 11.

For example, in the pixel region 21, a light shielding filter or the like is arranged for the pixel 22 located in the vicinity of the boundary between the first pixel region 21A and the second pixel region 21B (in the vicinity of the center in the column direction), which is a structure in which light is not received by the pixel 22 in the vicinity of the boundary, whereby an effect equivalent to that in the case where the dummy core 13 is provided is obtained. Furthermore, for example, in the pixel region 21, charges are not read out from the pixel 22 located in the vicinity of the boundary between the first pixel region 21A and the second pixel region 21B (in the vicinity of the center in the column direction), whereby an effect equivalent to that in the case where the dummy core 13 is provided is obtained.

Moreover, for example, in a case where the detection unit 6 includes the CCD photodetector V1, by starting the horizontal transfer of the first horizontal shift register 32A and the second horizontal shift register 32B before the charges of the pixel 22 in the vicinity of the boundary between the first pixel region 21A and the second pixel region 21B is transferred, an effect equivalent to that in the case where the dummy core 13 is provided is obtained.

Furthermore, in the above embodiment, although the conversion coefficient K is calculated in the measurement of the sample M, the calculation of the conversion coefficient K may not necessarily be performed every time the sample M is measured. The conversion coefficient K may be calculated only at the time of shipment inspection and maintenance work, and the conversion coefficient K recorded in the calculation unit 7 at the time of shipment inspection and maintenance work may be uniformly used at the time of the measurement of the sample M.

The gist of the present disclosure is as described in the following [1] to [8].

[1] A film thickness measurement device including: a spectroscopic unit configured to spectrally disperses each of reference light output from a light source and measurement light output from the light source and reflected by a sample; a detection unit configured to detect a spectral image of the reference light and a spectral image of the measurement light, the reference light and the measurement light being dispersed by the spectroscopic unit; and an analysis unit configured to analyze a film thickness of the sample on the basis of reference data obtained from a detection result of the spectral image of the reference light and measurement data obtained from a detection result of the spectral image of the measurement light, in which the spectroscopic unit wavelength-resolves the reference light and the measurement light in a first direction and forms a spectral image for each wavelength in a second direction intersecting the first direction, and the detection unit includes a first pixel region and a second pixel region divided in the second direction, receives the spectral image of the reference light in the first pixel region, and receives the spectral image of the measurement light in the second pixel region.

[2] The film thickness measurement device according to [1], in which the detection unit is a CCD photodetector including: a first horizontal shift register to which a charge generated in each column of the first pixel region is transferred; and a second horizontal shift register to which a charge generated in each column of the second pixel region is transferred.

[3] The film thickness measurement device according to [1], in which the detection unit is a CCD photodetector including: a first accumulation unit in which the charge generated in each column of the first pixel region are accumulated; a second accumulation unit in which the charge generated in each column of the second pixel region are accumulated; a first readout unit configured to output an electrical signal of each column corresponding to a magnitude of the charge accumulated in the first accumulation unit; and a second readout unit configured to output an electrical signal of each column according to a magnitude of the charge accumulated in the second accumulation unit.

[4] The film thickness measurement device according to [1], in which the detection unit is a CMOS photodetector including: a first readout unit configured to output the charge generated in each column of the first pixel region; and a second readout unit configured to output the charge generated in each column of the second pixel region.

[5] The film thickness measurement device according to any one of [1] to [4], further including: a first optical fiber configured to guide the reference light to the spectroscopic unit; a second optical fiber configured to guide the measurement light to the spectroscopic unit; and a fiber end in which a core of the first optical fiber and a core of the second optical fiber are bundled, in which an arrangement direction of the core of the first optical fiber and the core of the second optical fiber at the fiber end coincides with an extending direction of a slit on an input surface of the spectroscopic unit.

[6] The film thickness measurement device according to [5], in which a dummy core configured to physically separate the core of the first optical fiber and the core of the second optical fiber is provided at the fiber end.

[7] The film thickness measurement device according to any one of [1] to [6], further including: a calculation unit configured to calculate a conversion coefficient for converting a detection value of an intensity for each wavelength of the reference light into a value corresponding to an intensity for each wavelength of the measurement light from a reference sample, in which the calculation unit calculates the conversion coefficient by using an exposure time ratio between the first pixel region and the second pixel region, and the analysis unit calculates reflectance for each wavelength of the sample on the basis of the detection value of the intensity for each wavelength of the reference light and a value corresponding to the intensity for each wavelength of the measurement light from the reference sample, the value being obtained from the conversion coefficient.

[8] A film thickness measurement method including: a spectroscopic step of spectrally dispersing each of reference light output from a light source and measurement light output from the light source and reflected by a sample; a detection step of detecting a spectral image of the reference light and a spectral image of the measurement light, the reference light and the measurement light being dispersed by the spectroscopic step; and an analysis step of analyzing a film thickness of the sample on the basis of reference data obtained from a detection result of the spectral image of the reference light and measurement data obtained from a detection result of the spectral image of the measurement light, in which in the spectroscopic step, the reference light and the measurement light are wavelength-resolved in a first direction and a spectral image for each wavelength is formed in a second direction intersecting the first direction, and in the detection step, using a first pixel region and a second pixel region divided in the second direction, the spectral image of the reference light is received in the first pixel region, and the spectral image of the measurement light is received in the second pixel region.

Reference Signs List

| | |
|---|---|
| 1 | Film thickness measurement device |
| 2 | Light source |
| 5 | Spectroscopic unit |
| 5a | Input surface |
| 6 | Detection unit |
| 7 | Calculation unit |
| 8 | Analysis unit |
| 9A | First optical fiber |
| 9B | Second optical fiber |
| 11 | Fiber end |
| 12A, 12B | Core |
| 13 | Dummy core |
| 14 | Slit |
| 21A | First pixel region |
| 21B | Second pixel region |
| 32A | First horizontal shift register |
| 32B | Second horizontal shift register |
| 41A | First accumulation unit |
| 41B | Second accumulation unit |
| 42A | First readout unit |
| 42B | Second readout unit |
| 57A | First readout unit |
| 57B | Second readout unit |
| L1 | Reference light |
| L2 | Measurement light |
| D1 | First direction |
| D2 | Second direction |
| M | Sample |
| P1, P2 | Spectral image |
| V1, V2 | CCD photodetector |
| V3 | CMOS photodetector |

**Claims**

1.  A film thickness measurement device comprising:

    a spectroscopic unit configured to spectrally disperses each of reference light output from a light source and measurement light output from the light source and reflected by a sample;
    a detection unit configured to detect a spectral image of the reference light and a spectral image of the measurement light, the reference light and the measurement light being dispersed by the spectroscopic unit; and
    an analysis unit configured to analyze a film thickness of the sample on a basis of reference data obtained from a detection result of the spectral image of the reference light and measurement data obtained from a detection result of the spectral image of the measurement light, wherein
    the spectroscopic unit wavelength-resolves the reference light and the measurement light in a first direction and forms a spectral image for each wavelength in a second direction intersecting the first direction, and
    the detection unit includes a first pixel region and a second pixel region divided in the second direction, receives the spectral image of the reference light in the first pixel region, and receives the spectral image of the measurement light in the second pixel region.

2.  The film thickness measurement device according to claim 1, wherein
    the detection unit is a CCD photodetector including:

a first horizontal shift register to which a charge generated in each column of the first pixel region is transferred; and

a second horizontal shift register to which a charge generated in each column of the second pixel region is transferred.

3. The film thickness measurement device according to claim 1, wherein
the detection unit is a CCD photodetector including:

a first accumulation unit in which a charge generated in each column of the first pixel region are accumulated;
a second accumulation unit in which a charge generated in each column of the second pixel region are accumulated;
a first readout unit configured to output an electrical signal of each column corresponding to a magnitude of the charge accumulated in the first accumulation unit; and
a second readout unit configured to output an electrical signal of each column according to a magnitude of the charge accumulated in the second accumulation unit.

4. The film thickness measurement device according to claim 1, wherein
the detection unit is a CMOS photodetector including:

a first readout unit configured to output a charge generated in each column of the first pixel region; and
a second readout unit configured to output a charge generated in each column of the second pixel region.

5. The film thickness measurement device according to any one of claims 1 to 4, further comprising:

a first optical fiber configured to guide the reference light to the spectroscopic unit;
a second optical fiber configured to guide the measurement light to the spectroscopic unit; and
a fiber end in which a core of the first optical fiber and a core of the second optical fiber are bundled, wherein
an arrangement direction of the core of the first optical fiber and the core of the second optical fiber at the fiber end coincides with an extending direction of a slit on an input surface of the spectroscopic unit.

6. The film thickness measurement device according to claim 5, wherein
a dummy core configured to physically separate the core of the first optical fiber and the core of the second optical fiber is provided at the fiber end.

7. The film thickness measurement device according to any one of claims 1 to 4, further comprising:

a calculation unit configured to calculate a conversion coefficient for converting a detection value of an intensity for each wavelength of the reference light into a value corresponding to an intensity for each wavelength of the measurement light from a reference sample, wherein
the calculation unit calculates the conversion coefficient by using an exposure time ratio between the first pixel region and the second pixel region, and
the analysis unit calculates reflectance for each wavelength of the sample on a basis of the detection value of the intensity for each wavelength of the reference light and a value corresponding to the intensity for each wavelength of the measurement light from the reference sample, the value being obtained from the conversion coefficient.

8. A film thickness measurement method comprising:

a spectroscopic step of spectrally dispersing each of reference light output from a light source and measurement light output from the light source and reflected by a sample;
a detection step of detecting a spectral image of the reference light and a spectral image of the measurement light, the reference light and the measurement light being dispersed by the spectroscopic step; and
an analysis step of analyzing a film thickness of the sample on a basis of reference data obtained from a detection result of the spectral image of the reference light and measurement data obtained from a detection result of the spectral image of the measurement light, wherein
in the spectroscopic step, the reference light and the measurement light are wavelength-resolved in a first direction and a spectral image for each wavelength is formed in a second direction intersecting the first direction, and
in the detection step, using a first pixel region and a second pixel region divided in the second direction, the spectral image of the reference light is received in the first pixel region, and the spectral image of the measurement light is received in the second pixel region.

EP 4 563 936 A1

*Fig.1*

# Fig.2

(a)

(b)

# Fig.3

(a)

(b)

EP 4 563 936 A1

**Fig.4**

ROW DIRECTION
(WAVELENGTH RESOLUTION DIRECTION)

D1

**Fig.5**

## Fig.6

V1

| 33 | 32B | 33 | 34B |
|---|---|---|---|

| DUMMY PIXEL | SECOND HORIZONTAL SHIFT REGISTER | DUMMY PIXEL | |
|---|---|---|---|

21

SECOND PIXEL REGION ~21B

FIRST PIXEL REGION ~21A

| DUMMY PIXEL | FIRST HORIZONTAL SHIFT REGISTER | DUMMY PIXEL | |
|---|---|---|---|

| 33 | 32A | 33 | 34A |
|---|---|---|---|

Fig.7

# Fig.8

# Fig.9

EP 4 563 936 A1

# Fig.10

```
        ┌─────────────┐
        │    START    │
        └─────────────┘
               │
  ┌──────────────────────────┐
  │    CALCULATION STEP      │──S01
  └──────────────────────────┘
               │
  ┌──────────────────────────┐
  │    SPECTROSCOPIC STEP    │──S02
  └──────────────────────────┘
               │
  ┌──────────────────────────┐
  │     DETECTION STEP       │──S03
  └──────────────────────────┘
               │
  ┌──────────────────────────┐
  │     ANALYSIS STEP        │──S04
  └──────────────────────────┘
               │
        ┌─────────────┐
        │     END     │
        └─────────────┘
```

# Fig.11

(a)

(b)

(c)

(d)

(e)

# Fig.12

```
                    ┌─────────────┐
                    │    START    │
                    └──────┬──────┘
                           │
    ┌──────────────────────────────────────────────┐
    │          PREPARE REFERENCE SAMPLE            │─── S11
    └──────────────────────┬───────────────────────┘
                           │
    ┌──────────────────────────────────────────────┐
    │            TURN ON LIGHT SOURCE              │─── S12
    └──────────────────────┬───────────────────────┘
                           │
    ┌──────────────────────────────────────────────┐
    │      ACQUIRE AND RECORD SPECTRUM DATA        │
    │       OF CORRECTION REFERENCE LIGHT          │─── S13
    └──────────────────────┬───────────────────────┘
                           │
    ┌──────────────────────────────────────────────┐
    │      ACQUIRE AND RECORD SPECTRUM DATA        │
    │      OF CORRECTION MEASUREMENT LIGHT         │─── S14
    └──────────────────────┬───────────────────────┘
                           │
    ┌──────────────────────────────────────────────┐
    │            TURN OFF LIGHT SOURCE             │─── S15
    └──────────────────────┬───────────────────────┘
                           │
    ┌──────────────────────────────────────────────┐
    │      ACQUIRE AND RECORD SPECTRUM DATA        │
    │    OF DARK SIGNAL IN FIRST PIXEL REGION      │─── S16
    └──────────────────────┬───────────────────────┘
                           │
    ┌──────────────────────────────────────────────┐
    │      ACQUIRE AND RECORD SPECTRUM DATA        │
    │    OF DARK SIGNAL IN SECOND PIXEL REGION     │─── S17
    └──────────────────────┬───────────────────────┘
                           │
                         ( A )
```

## Fig.13

```
                    ( A )
                      │
   ┌──────────────────────────────────────┐
   │           PREPARE SAMPLE              │──S21
   └──────────────────────────────────────┘
                      │
   ┌──────────────────────────────────────┐
   │     SET FIRST EXPOSURE TIME AND       │──S22
   │        SECOND EXPOSURE TIME           │
   └──────────────────────────────────────┘
                      │
   ┌──────────────────────────────────────┐
   │            CALCULATE                  │──S23
   │      CONVERSION COEFFICIENT           │
   └──────────────────────────────────────┘
                      │
   ┌──────────────────────────────────────┐
   │          TURN ON LIGHT SOURCE         │──S24
   └──────────────────────────────────────┘
                      │
   ┌──────────────────────────────────────┐
   │        ACQUIRE SPECTRUM DATA          │──S25
   │         OF REFERENCE LIGHT            │
   └──────────────────────────────────────┘
                      │
   ┌──────────────────────────────────────┐
   │        ACQUIRE SPECTRUM DATA          │──S26
   │        OF MEASUREMENT LIGHT           │
   └──────────────────────────────────────┘
                      │
   ┌──────────────────────────────────────┐
   │          TURN OFF LIGHT SOURCE        │──S27
   └──────────────────────────────────────┘
                      │
   ┌──────────────────────────────────────┐
   │       ACQUIRE SPECTRUM DATA OF        │──S28
   │    DARK SIGNAL IN FIRST PIXEL REGION  │
   └──────────────────────────────────────┘
                      │
   ┌──────────────────────────────────────┐
   │       ACQUIRE SPECTRUM DATA OF        │──S29
   │   DARK SIGNAL IN SECOND PIXEL REGION  │
   └──────────────────────────────────────┘
                      │
   ┌──────────────────────────────────────┐
   │            CALCULATE                  │──S30
   │      SPECTRAL REFLECTANCE DATA        │
   └──────────────────────────────────────┘
                      │
   ┌──────────────────────────────────────┐
   │        CALCULATE FILM THICKNESS       │──S31
   └──────────────────────────────────────┘
                      │
                 (  END  )
```

## INTERNATIONAL SEARCH REPORT

| International application No. |
|---|
| **PCT/JP2023/032088** |

### A.    CLASSIFICATION OF SUBJECT MATTER

*G01B 11/06*(2006.01)i
FI:   G01B11/06 H

According to International Patent Classification (IPC) or to both national classification and IPC

### B.    FIELDS SEARCHED

Minimum documentation searched (classification system followed by classification symbols)

G01B11/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| Y | JP 2012-63321 A (HAMAMATSU PHOTONICS KK) 29 March 2012 (2012-03-29) | 1-6, 8 |
|   | paragraphs [0030]-[0039], fig. 3 | |
| A | paragraphs [0030]-[0039], fig. 3 | 7 |
| Y | JP 2002-5823 A (DAINIPPON SCREEN MFG. CO., LTD.) 09 January 2002 (2002-01-09) | 1-6, 8 |
|   | paragraph [0063], fig. 7 | |
| Y | JP 2012-156177 A (SONY CORP.) 16 August 2012 (2012-08-16) | 4 |
|   | paragraphs [0002], [0003] | |
| Y | JP 2002-31510 A (LEICA MICROSYSTEMS JENA GMBH) 31 January 2002 (2002-01-31) | 5-6 |
|   | paragraphs [0021], [0043]-[0048], fig. 3 | |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/032088**

| Patent document cited in search report | | | Publication date (day/month/year) | Patent family member(s) | | | Publication date (day/month/year) |
|---|---|---|---|---|---|---|---|
| JP | 2012-63321 | A | 29 March 2012 | US paragraphs [0052]-[0061], fig. 3 WO DE TW CN KR | 2013/0169968 2012/036213 112011103113 201224430 103140750 10-2013-0106810 | A1 A1 B A A A | |
| JP | 2002-5823 | A | 09 January 2002 | (Family: none) | | | |
| JP | 2012-156177 | A | 16 August 2012 | (Family: none) | | | |
| JP | 2002-31510 | A | 31 January 2002 | US paragraphs [0022], [0056]-[0061], fig. 3 EP DE | 2002/0027657 1152236 10021378 | A1 A2 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012063321 A